# EUROPEAN PATENT APPLICATION

(11) **EP 4 708 369 A1**
(43) Date of publication of application: **11.03.2026**
(21) Application number: 24826204.0
(22) Date of filing: 17.06.2024
(51) Int. Cl.: H01M 4/04, B65H 43/04, G06Q 50/04, H01M 10/42, G01N 21/88, B26D 1/24, B26D 7/27

(54) **SECONDARY BATTERY MANUFACTURING SYSTEM**

(30) Priority: 19.06.2023 KR 20230078310; 26.07.2023 KR 20230097121
(71) Applicant: LG Energy Solution, Ltd., Seoul 07335 (KR)
(72) Inventor: SIM, Min Kyu, Daejeon 34122 (KR); KIM, Min Su, Daejeon 34122 (KR); PARK, Jong Seok, Daejeon 34122 (KR); HAN, Ki Deok, Daejeon 34122 (KR); PARK, Su Wan, Daejeon 34122 (KR); KIM, June Hee, Daejeon 34122 (KR); SHIN, Jong Kwon, Daejeon 34122 (KR)
(74) Representative: BCKIP Part mbB
(86) International application number: PCT/KR2024/008284
(87) International publication number: WO 2024/262887

(57) **Abstract**

Provided is a secondary battery manufacturing system according to example embodiments of the present technology. The system includes a first controller configured to collect coordinate data, and a measuring device configured to collect measurement data of an electrode sheet, in which the measuring device is configured to relate the coordinate data with the measurement data to generate coordinate-related inspection data.

## Description

### [Technical Field]

The present invention relates to a secondary battery manufacturing system configured to generate a roll map indicating a lot that is a unit of a wound electrode sheet. The present application claims the benefit of priority based on Korean Patent Application No. 10-2023-0078310, filed on June 19, 2023 and Korean Patent Application No. 10-2023-0097121, filed on July 26, 2023, and the entire contents of the Korean patent applications are incorporated herein by reference.

### [Background Art]

A secondary battery can be charged and discharged a plurality of times unlike a primary battery. Secondary batteries have been widely used as energy sources for various types of wireless devices such as handsets, laptop computers, and cordless vacuum cleaners. Recently, a main use of secondary batteries is moving from mobile devices to mobility, as manufacturing costs per unit capacity of secondary batteries drastically decrease due to improved energy density and economies of scale and a range of battery electric vehicles (BEVs) increases to the same level as fuel vehicles.

A secondary battery is manufactured by an electrode process, an assembly process, and an activation process. Among these processes, the electrode process is a key process in determining the yield and performance of a battery cell. The electrode process may include a coating process, a roll press process, and a slitting process. In the coating process, an active material and an insulating material may be applied to a surface of a current collector. In the roll press process, an electrode may be pressed by pressing rolls. In the roll press process, a density, performance and surface quality of the electrode may be determined. In the slitting process, the electrode may be cut into a plurality of electrodes according to the design of battery cells.

### [Disclosure]

### [Technical Problem]

The present invention is directed to providing a system configured to generate a roll map including information about quality and defects in an electrode manufacturing process.

### [Technical Solution]

Example embodiments of the present invention provide a secondary battery manufacturing system including: a first controller configured to collect coordinate data of an electrode sheet based on a winding amount signal of the electrode sheet generated by an encoder, in which the encoder is configured to sense a length of the electrode sheet wound by a rewinder to generate the winding amount signal, and the coordinate data includes coordinates indicating a position on the electrode sheet; and a measuring device configured to collect measurement data of the electrode sheet, in which the measuring device is configured to relate the coordinate data with the measurement data to generate coordinate-related measurement data.

The measurement data may include measured values and a time value matching the measured values.

The measuring device may be configured to calibrate the coordinate data, based on a position of the measuring device.

The measuring device may be configured to calibrate the coordinate data based on an offset length to relate the coordinate data with the measurement data, and the offset length may be a length of the electrode sheet between the rewinder and a portion of the electrode sheet measured by the measuring device.

The measuring device may be configured to transmit the coordinate-related measurement data to the first controller.

The measuring device may be configured to scan each of a plurality of sections of the electrode sheet, and the transmitting of the coordinate-related measurement data by the measuring device may be triggered by completion of scanning performed by the measuring device.

The measuring device may be configured to further generate compressed measurement data based on the measurement data and the coordinate data, and a size of the compressed measurement data may be less than a size of the coordinate-related measurement data.

The compressed measurement data may include a representative value of the measured values of the measurement data, and a start coordinate and an end coordinate of a portion of the electrode sheet from which the measurement data is collected, and the start coordinate and the end coordinate may be determined based on the coordinate data.

The compressed measurement data may further include a judgement value determined from the measurement data.

The compressed measurement data may further include a timestamp indicating a date and time when the measurement data is collected.

The compressed measurement data may further include a measuring device identifier (ID) identifying the measuring device and an equipment ID identifying equipment for processing the electrode sheet.

The secondary battery manufacturing system may further include a first server configured to generate a roll map indicating the electrode sheet, based on the compressed measurement data.

The first controller may be configured to transmit the coordinate-related measurement data to the first server.

The secondary battery manufacturing system may further include a second controller configured to relay the transmission of the coordinate-related measurement data between the first server and the first controller, and the second controller may be configured to generate a signal for controlling the rewinder.

The secondary battery manufacturing system may further include a second server configured to store the coordinate-related measurement data.

The secondary battery manufacturing system may further include a third server configured to transmit an application programming interface (API) call to the second server, and the second server may be configured to transmit the coordinate-related measurement data to the third server in response to the API call.

Example embodiments provide a secondary battery manufacturing system. The secondary battery manufacturing system includes: a controller configured to collect coordinate data of an electrode sheet based on a winding amount signal of the electrode sheet generated by an encoder, wherein the encoder is configured to sense a length of the electrode sheet wound by a rewinder to generate the winding amount signal, and the coordinate data includes coordinates indicating a position on the electrode sheet; measuring device configured to collect measurement data of the electrode sheet, relate the coordinate data with the measurement data to generate coordinate-related measurement data, and generate compressed measurement data including a representative value of measured values of the measurement data, based on the coordinate data and the measurement data; and a server configured to generate a roll map indicating the electrode sheet based on the compressed measurement data, in which the server is configured to store the compressed measurement data and the coordinate-related measurement data.

The server may be a data warehouse.

Example embodiments provide a secondary battery manufacturing system. The secondary battery manufacturing system includes: a controller configured to collect coordinate data of an electrode sheet based on a winding amount signal of the electrode sheet generated by an encoder, wherein the encoder is configured to sense a length of the electrode sheet wound by a rewinder to generate the winding amount signal, and the coordinate data includes coordinates indicating a position on the electrode sheet; and a measuring device configured to collect measurement data of the electrode sheet and relate the coordinate data with the measurement data to generate coordinate-related measurement data, in which the controller is configured to control the rewinder.

### [Advantageous Effects]

According to example embodiments of the present invention, a system for generating a roll map that enables feedback, feed forward, and tracking of an electrode process can be provided.

Effects achievable from example embodiments of the present invention are not limited to the above-described effects, and other effects that are not described herein will be clearly derived and understood by those of ordinary skilled in the art to which the example embodiments of the present invention pertain from the following description. That is, unintended effects achieved when the example embodiments of the present invention are implemented are derivable by those of ordinary skilled in the art from the example embodiments of the present invention.

### [Brief Description of the Drawings]

FIG. 1 illustrates a secondary battery manufacturing system according to example embodiments.
FIG. 2 illustrates measurement of an electrode sheet by a measuring device.
FIG. 3 illustrates a visualized roll map.
FIG. 4 is a flowchart of a method of generating a roll map according to example embodiments.
FIG. 5 illustrates a secondary battery manufacturing system according to example embodiments.
FIG. 6 illustrates a secondary battery manufacturing system according to example embodiments.

### [Best Mode]

Hereinafter, embodiments of the present invention will be described in detail with reference to the accompanying drawings. Before describing embodiments of the present invention, the terms or expressions used in the present specification and claims should not be construed as being limited to as generally understood or as defined in commonly used dictionaries, and should be understood according to meanings and concepts corresponding to the present invention on the basis of the principle that the inventor(s) of the application can appropriately define the terms or expressions to optimally explain the present invention.

Therefore, embodiments set forth herein and configurations illustrated in the drawings are only examples of the present invention and do not reflect all the technical ideas of the present invention and thus it should be understood that various equivalents and modifications that replace the configurations would have been made at the filing date of the present application.

Well-known configurations or functions related to describing the present invention are not described in detail when it is determined that they would obscure the subject matter of the present invention due to unnecessary detail.

Because embodiments of the present invention are provided to more fully explain the present invention to those of ordinary skill in the art, the shapes, sizes, etc. of components illustrated in the drawings may be exaggerated, omitted, or schematically illustrated for clarity. Therefore, it should not be understood that the sizes or proportions of components fully reflect the actual sizes or proportions thereof.

### (First Embodiment)

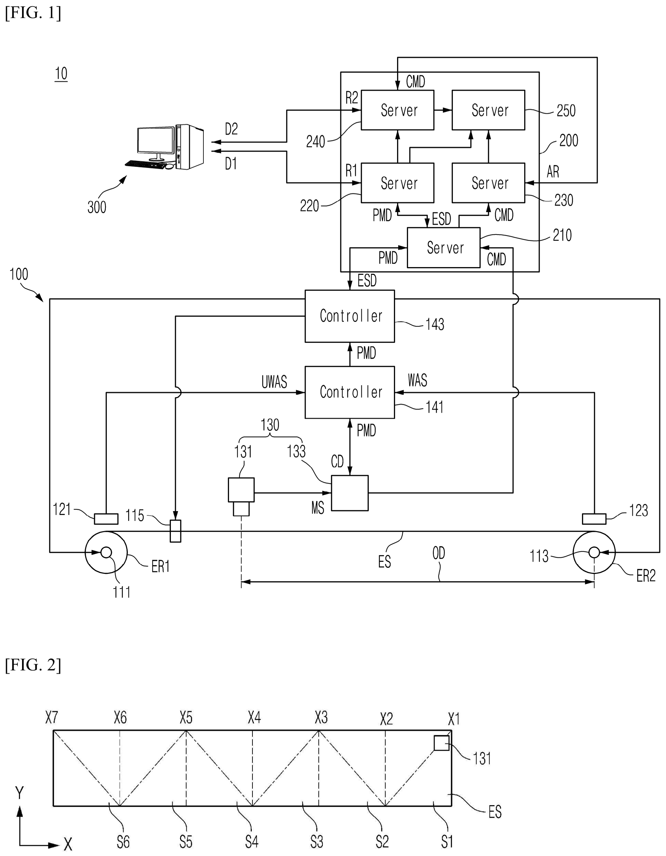

FIG. 1 illustrates a secondary battery manufacturing system 10 according to example embodiments.

FIG. 2 illustrates measurement of an electrode sheet ES by a measuring device.

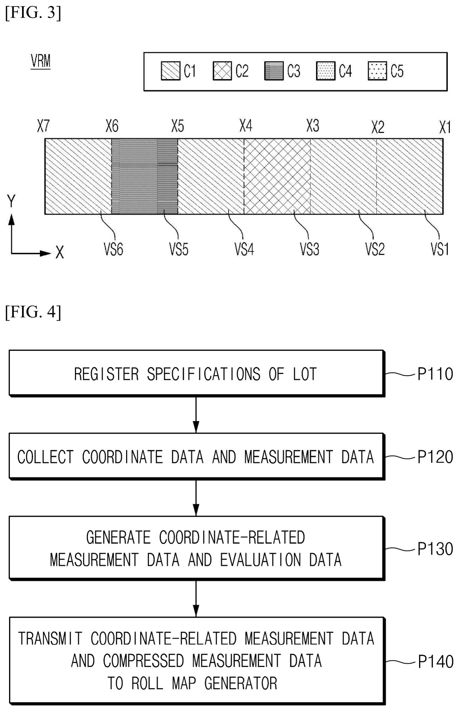

FIG. 3 illustrates a visualized roll map VRM.

Referring to FIGS. 1 to 3, the secondary battery manufacturing system 10 may include a secondary battery manufacturing apparatus 100, a roll map generator 200, and a user device 300.

The secondary battery manufacturing apparatus 100 may be configured to perform a secondary battery manufacturing process. The secondary battery manufacturing apparatus 100 may include an unwinder 111, a rewinder 113, a processing apparatus 115, a first encoder 121, a second encoder 123, a measuring device 130, a first controller 141, and a second controller 143.

The unwinder 111 may be configured to unwind the electrode sheet ES from an electrode roll ER1. The rewinder 113 may be configured to wind the electrode sheet ES into an electrode roll ER2. Accordingly, the electrode sheet ES may be moved between the unwinder 111 and the rewinder 113.

A process of manufacturing a secondary battery (e.g., an electrode process) may be performed on the electrode sheet ES. The electrode process is performed on the electrode sheet ES unwound from the electrode roll ER1 and wound into the electrode roll ER2 and thus may be a roll-to-roll process.

The electrode sheet ES may be processed by the processing apparatus 115. For example, the processing apparatus 115 may include a coater, and the electrode sheet ES may be coated with an electrode slurry. As another example, the processing apparatus 115 may include a pressing roll, and the roll pressing process may be performed on the electrode sheet ES coated with the electrode slurry. As another example, the processing apparatus 115 may include a splicing die and a scrap port, and a portion of the electrode sheet ES may be scrapped. As another example, the processing apparatus 115 may include a slitting knife, and the electrode sheet ES may be divided into a plurality of electrode sheets.

The coating process is a process of applying a coating material such as the electrode slurry onto the electrode sheet ES. The electrode slurry may include an electrode active material, a conductive agent, a binder, and a solvent. The electrode slurry may be provided by dissolving the electrode active material, the conductive additive, the binder, etc. in the solvent.

The roll pressing process is a process of passing the electrode sheet ES coated with the electrode slurry between pressing rolls facing each other. By using the pressing rolls, a surface of an electrode may be planarized and a bonding force between the active material and a current collector may be increased.

The coating process and the roll pressing process are performed on the electrode sheet ES having a broad width to enhance the production (e.g., GWh) per line of secondary battery production equipment. Thereafter, in the slitting process, the electrode sheet having the broad width may be cut according to the specifications of a battery cell.

The first encoder 121 may be configured to sense the amount of the electrode sheet ES unwound from the electrode roll ER1 by the unwinder 111. Accordingly, the first encoder 121 may be configured to generate an unwinding amount signal UWAS indicating the amount of unwinding the electrode sheet ES. The first encoder 121 may be configured to transmit the unwinding amount signal UWAS1 to the first controller 141. The first controller 141 may be configured to collect input amount data based on the unwinding amount signal UWAS of the electrode sheet ES. The input amount data may represent the amount of material (i.e., the electrode roll ER1) inputted into the secondary battery manufacturing apparatus 100 to manufacture a secondary battery.

The second encoder 123 may be configured to sense the amount of the electrode sheet ES wound into the electrode roll ER2 by the rewinder 113. Accordingly, the second encoder 123 may be configured to generate a winding amount signal WAS indicating the amount of winding the electrode sheet ES. The second encoder 121 may be configured to transmit the winding amount signal WAS1 to the first controller 141. The first controller 141 may be configured to collect exhaustion amount data based on the winding amount signal WAS of the electrode sheet ES. The exhaustion amount data may represent the production performance of the secondary battery manufacturing apparatus 100.

In some cases, a portion of the electrode sheet ES may be scraped and thus the amount of the electrode sheet ES unwound by the unwinder 111 may be different from the amount of the electrode sheet ES wound by the rewinder 113. In addition, when the electrode sheet ES is stretched due to pressure in a subsequent process such as the roll pressing process, the amount of the electrode sheet ES unwound by the unwinder 111 may be different from the amount of the electrode sheet ES wound by the rewinder 113.

As a non-limiting example, the first controller 141 and the second controller 143 may be programmable logic controllers (PLCs). The PLC is a special type of microprocessor-based controller that stores instructions using a programmable memory and implements functions such as logic, sequencing, timing, counting and an arithmetic operation to control machines and processes. It is easy to operate and program the PLC.

The first and second controllers 141 and 143 may include a power supply, a CPU, an input interface, an output interface, a communication interface, and memory devices. The power supply may be configured to supply power to the other components of the first and second controllers 141 and 143, such as the CPU, the input interface, the output interface, the communication interface, and the memory devices, to operate the first and second controllers 141 and 143. The memory devices may include a read only memory (ROM) configured to store system programs such as operating systems, and a random access memory (RAM) configured to store data such as user programs, state information of input and output devices, and values of a timer, a counter, and other internal devices. The CPU may be configured to control communication between modules that implement logic and convert input signals into output operation signals. The CPU may operate based on a system program and a user program stored in the memory devices. The CPU may be configured to write or read inspection data and measurement data to or from data areas of the memory devices, based on the system program and the user program. Conditions or data of industrial devices and production processes may be transmitted to the CPU through an input module. A result of processing performed by the CPU may be transmitted to an actuator through an output module. The communication interface may be configured to transmit and receive data between the first and second controllers 141 and 143 or between the second controller 143 and the server 210.

However, embodiments are not limited thereto, and the first and second controllers 141 and 143 may each include one of a simple controller, a complex processor such as a microprocessor, a CPU or a GPU, a processor configured by software, dedicated hardware, and firmware. The first and second controllers 141 and 143 may be implemented, for example, by a general-purpose computer or application-specific hardware such as a digital signal processor (DSP), a field-programmable gate array (FPGA) or an application specific integrated circuit (ASIC).

The first controller 141 may be configured to collect coordinate data CD of the electrode sheet ES, based on the unwinding amount signal UWAS or the winding amount signal WAS of the electrode sheet ES. For example, the first controller 141 may determine a moving distance of the electrode sheet ES based on the winding amount signal WAS of the electrode sheet ES, and accordingly, a position of a portion of the electrode sheet ES wound by the rewinder 113 on the electrode sheet ES may be determined at each time point at which the coating process is performed. Hereinafter, the technical idea of the present invention will be described with respect to an embodiment in which the first controller 141 collects the coordinate data CD based on the winding amount signal WAS of the electrode sheet ES.

The coordinate data CD may include coordinates matching each portion of the electrode sheet ES. That is, arbitrary points on the electrode sheet ES may have coordinates. The coordinates may be one-dimensional (1D) quantity in a machine direction MD in which the electrode sheet ES is moved (or a longitudinal direction of the electrode sheet ES) but are not limited thereto. The coordinates may be two-dimensional (2D) quantity in the machine direction MD and a transverse direction TD of the electrode sheet ES (or a width direction of the electrode sheet ES).

The measuring device 130 may be configured to measure the electrode sheet ES to collect measurement data of the electrode sheet ES. The measuring device 130 may be configured to scan the electrode sheet ES. The measuring device 130 may move in the transverse direction TD. During one scanning, a sensing part 131 of the measuring device 130 may move from one end of the electrode sheet ES in the transverse direction TD to another end of the electrode sheet ES in the transverse direction TD.

While the measuring device 130 performs scanning in the transverse direction TD, the electrode sheet ES may be moved in the machine direction MD by the unwinder 111 and the rewinder 113. Accordingly, a portion of the electrode sheet ES measured by the measuring device 130 may be in a zigzag form as indicated by a one-dot chain line of FIG. 2. That is, the one-dot chain line of FIG. 2 may indicate a moving path of a field of measure (FOM) of the measuring device 130 according to the movement of the electrode sheet ES and the movement of the measuring device 130.

The measurement data may include a result of inspection expressed numerically. For example, the measurement data may include dimension data, e.g., a thickness and a width, of the electrode sheet ES, data of the amount of loading a coating material on the electrode sheet ES, dimension data, e.g., a width of an insulating material on the coating material and an overlapping width between the coating material and the insulating material, mismatch data between coated lanes on an upper surface of the electrode sheet ES and coated lanes on a lower surface of the electrode sheet ES, and the like. Here, the amount of loading is the amount of the coating material loaded per unit area of the electrode sheet ES, and may be an area density of the coating material.

As a non-limiting example, the measuring device 130 may be one of a web gauge and a thickness meter that are manufactured by Thermofisher Scientific.

The measuring device 130 may include the sensing part 131 and a processor 133. The sensing part 131 may be configured to sense a physical quantity of the electrode sheet ES to generate a measurement signal MS. For example, the sensing part 131 may include a time delay and integration (TDI) camera, a complementary metal oxide semiconductor (CMOS) image sensor, a time-of-flight (TOF) sensor, etc. The sensing part 131 may include an emitter and a receiver that are configured to perform measurement using a non-destructive signal such as ultrasound waves, microwaves, terahertz waves, or infrared rays. The sensing part 131 may include analog and/or digital sensors, such as a biosensor, a chemical sensor, a composition sensor, a current and/or power meter, an air quality sensor, a gas sensor, a hall effect sensor, a brightness level sensor, and an optical sensor. The measuring device 130 may include a pressure sensor, a temperature sensor, an ultrasonic sensor, a proximity sensor, a door state sensor, a motion tracking sensor, a humidity sensor, a visible light and infrared sensor, a camera, etc.

The secondary battery manufacturing apparatus 100 may further include an inspector configured to inspect the electrode sheet ES to collect inspection data. The inspection data may include a result of judging the quality of a portion of the electrode sheet ES and a process event. For example, the inspection data may include data about the appearance of the electrode sheet ES collected by an image-based inspection device such as a vision machine, data about disconnections and seams on the electrode sheet ES, data about a portion of the electrode sheet ES on which sampling inspection is performed, data about a portion of the electrode sheet ES to be scrapped, data about the scraped portion of the electrode sheet ES, data about whether the coating material and the insulating material on the electrode sheet ES are defective or not, data about datum points indicating a position of the electrode sheet ES, and defect data such as pinhole defects, crater defects, line defects, crack defects, side ring defects, island defects, folding defects, wrinkle defects, pit defects, and scratch defects. The datum points may be formed on the electrode sheet ES at certain intervals, and other elements on the electrode sheet ES may be located based on the datum points. The inspector may be a color sensor, a seam sensor, a datum point sensor, or a vision machine.

The measuring device 130 may be configured to collect two or more types of data. For example, the measuring device 130 may be configured to measure a thickness of the electrode sheet ES and a measured amount of the coating material on the electrode sheet ES (e.g., the amount of loading on the electrode sheet ES or the thickness of the electrode sheet ES). Alternatively, the measuring device 130 may be configured to sense datum points on the electrode sheet ES in addition to measuring a mismatch of the electrode sheet ES.

The measurement data and the inspection data described above may be time series data. The measurement data and the inspection data may be temporally ordered. The measurement data and the inspection data may be indexed by time. The measurement data may include measured values and a time value (or time values) matching the measured values. The test data may include an inspection value and a time value (or time values) matching the inspection value. That is, the measurement data and the inspection data may be stored based on a point in time when measurement and inspection are performed, and may be related to the time values matching the measured values of the measurement data and the inspection values of the inspection data. The time values of the measurement data and the inspection data may be, for example, in the form of timestamp but are not limited thereto.

For example, measurement data (e.g., data of the amount of loading on the electrode sheet ES or thickness data of the electrode sheet ES) may include a series of measured values and time values related to a series of loading amount values. The measured values and the time values may be matched in a one-to-one manner but are not limited thereto. The measured values may be matched to a single timestamp, which indicates a starting point of the measurement, in a many-to-one manner. As another example, defect data may include a value indicating a defect and a time value related to the value indicating the defect. Here, the values indicating defects should be understood to mean that the values include information regarding at least one of the presence of defects and the types of defects.

The processor 133 may be configured to receive a measurement signal MS sensed by the sensing part 131 to collect measurement data. The processor 133 may be connected to the sensing part 131 by wire or wirelessly.

The first controller 141 may be in operative communication with the first and second encoders 121 and 123, the measuring device 130, and additional measuring devices and inspectors through a wired or wireless data network. The data network may be unidirectional or bidirectional. The data network may be implemented by a physical channel, WiFi, public networks and/or specialized networks using Bluetooth or other frequency bands.. The first and second encoders 121 and 123, the measuring device 130, and the additional measuring devices and inspectors may be configured to collect data from equipment, a workpiece, an intermediate product, and a product in the secondary battery manufacturing apparatus 100 or to generate a signal for collecting data. The first controller 141 may be configured to transmit the coordinate data CD to the processor 133.

The processor 133 may be configured to generate coordinate-related measurement data CMD based on the coordinate data CD and the measurement data. The processor 133 may be configured to relate the coordinate data CD with the measurement data to generate the coordinate-related measurement data CMD. In general, the measurement data may be processed based on a trigger point. Examples of the processing of the measurement data may include storing the measurement data, manipulating the measurement data (e.g., generating the coordinate-related measurement data CMD and compressed measurement data PMD), and transmitting the measurement data.

As a non-limiting example, the trigger point for processing the measurement data may be the completion of scanning. For example, the sensing part 131 may scan the electrode sheet ES in the transverse direction TD, and the measurement data may be stored, processed, manipulated, and transmitted whenever scanning is performed. As another example, the trigger point may be the completion of performing scanning multiple times or the completion of partially performing scanning.

The electrode sheet ES may be divided into a plurality of sections S1, S2, S3, S4, S5, and S6, based on scanning by the sensing part 131 of the measuring device 130. Each of the plurality of sections S1, S2, S3, S4, S5 and S6 may correspond to one of scans performed by the sensing part 131. In FIG. 2, dashed lines represent imaginary boundary lines between the plurality of sections S1, S2, S3, S4, S5, and S6.

According to example embodiments, the measuring device 130 may be configured to calibrate the coordinate data CD, based on a position of the measuring device 130. More specifically, the measuring device 130 may be configured to calibrate the coordinate data CD, based on an offset length OD, so that coordinates of the coordinate data CD may be related to the measured values of the measurement data.

The measuring device 130 may collect measurement data of a part corresponding to (e.g., overlapping) the sensing part 131, and the coordinate data CD may be collected by the second encoder 123 spaced apart from the sensing part 131 as described above. Accordingly, the parts of the electrode sheet ES corresponding to the coordinate data CD and the measurement signal MS, which are generated simultaneously, may differ.

According to example embodiments, the coordinate-related measurement data CMD may be provided by calibrating the coordinate data CD, which is collected at the same point in time as the measurement data based on the offset length OD, and relating the calibrated coordinate data CD with the measurement data. The coordinate-related measurement data CMD may include measured values, a time value matching the measured values, a start coordinate, and an end coordinate. The time value may be a timestamp indicating a date and time when the measurement data is collected. The start coordinate and the end coordinate may indicate a start point and an end point of a part of the electrode sheet ES from which the measurement data is collected. The start coordinate and the end coordinate may be determined based on the calibrated coordinate data CD. The coordinate-related measurement data CMD may include a measuring device ID identifying the measuring device 130 and an equipment ID identifying the secondary battery manufacturing apparatus 100.

A start coordinate of the section S1 is X1, and an end coordinate thereof is X2. A start coordinate of the section S2 is X2, and an end coordinate thereof is X3. A start coordinate of the section S3 is X3, and an end coordinate thereof is X4. A start coordinate of the section S4 is X4, and an end coordinate thereof is X5. A start coordinate of the section S5 is X5, and an end coordinate thereof is X6. A start coordinate of the section S6 is X6, and an end coordinate thereof is X7.

As another example, the sensing part 131 may be directly related to a position measuring device such as the first and second encoders 121 and 123 or be configured to sense a datum point on the electrode sheet ES. In this case, the processor 133 may be configured to collect the coordinate-related measurement data CMD, based on the measurement signal MS transmitted from the sensing part 131.

A plurality of guide rolls may be interposed between the sensing part 131 and the rewinder 113 to define a moving path of the electrode sheet ES. Accordingly, the offset length OD may be defined as a length of the electrode sheet ES between the portion of the electrode sheet ES sensed by the sensing part 131 and the rewinder 113. The offset length OD may be equal to or greater than a straight line distance between the sensing part 131 and the rewinder 113.

The processor 133 may be configured to generate the compressed measurement data PMD based on the measurement data and the coordinate data CD. The compressed measurement data PMD may include a representative value of the measurement data of each of the plurality of sections S1, S2, S3, S4, S5, and S6 of the electrode sheet ES, a judgement value, and a start coordinate and end coordinate of each of the plurality of sections S1, S2, S3, S4, S5, and S6 of the electrode sheet ES. The compressed measurement data PMD may further include a timestamp indicating a date and time when the measurement data of each of the plurality of sections S1, S2, S3, S4, S5, and S6 is collected, a measuring device ID, and an equipment ID.

The processor 133 may be configured to calculate the representative value of the measurement data of each of the plurality of sections S1, S2, S3, S4, S5, and S6 of the electrode sheet ES. The representative value of the measurement data of each of the plurality of sections S1, S2, S3, S4, S5, and S6 of the electrode sheet ES may include at least one of an average, a standard deviation, a median value, a maximum value, or a minimum value of the measurement data of each of the plurality of sections S1, S2, S3, S4, S5, and S6.

For example, when the coordinate-related measurement data CMD includes 1,500 measured values corresponding to one of scans performed by the sensing part 131, the compressed measurement data PMD may include a single representative value calculated based on the 1,500 measured values. Accordingly, a size of the compressed measurement data PMD may be different from a size of the coordinate-related measurement data CMD. The size of the compressed measurement data PMD may be less than the size of the coordinate-related measurement data CMD.

A server 220, which will be described below, performs various tasks for managing the production of a secondary battery, in addition to generating a roll map. According to example embodiments, a roll map is generated based on the compressed measurement data PMD instead of coordinate-related measurement data of a size substantially the same as that of raw measurement data, thus reducing resources of the server 220 to be allocated to generate and store the roll map. Accordingly, continuous manufacturing management may be provided from the server 220, and the reliability in the manufacture of the secondary battery may be improved.

The start coordinate and the end coordinate of each of the plurality of sections S1, S2, S3, S4, S5, and S6 of the electrode sheet ES may be determined based on the coordinate data CD of each of the plurality of sections S1, S2, S3, S4, S5, and S6. The start coordinate and end coordinate of the compressed measurement data PMD are substantially the same as the start coordinate and end coordinate of the corresponding compressed measurement data CMD.

In FIG. 2, each of the plurality of sections S1, S2, S3, S4, S5, and S6 of the electrode sheet ES may not correspond to one of scans performed by the sensing part 131 but may correspond to plurality of scans performed by the sensing part 131 or a part of a scan performed by the sensing part 131.

By processing the measurement data by a set method, judgement values of the plurality of sections S1, S2, S3, S4, S5, and S6 of the electrode sheet ES may be determined. When an amount of a measured coating material on the electrode sheet ES (e.g., the amount of loading on the electrode sheet ES or a thickness of the electrode sheet ES) is in a set range including upper and lower limits, a corresponding portion of the electrode sheet ES may be determined as a good-quality portion. The corresponding portion of the electrode sheet ES may be determined as defective, when the amount of the measured coating material on the electrode sheet ES (e.g., the amount of loading on the electrode sheet ES or the thickness of the electrode sheet ES) is less than the lower limit or greater than the upper limit.

As another example, a measured value (or a representative value) that is in a first range may be determined as normal, a measured value (or a representative value) that is in a second range greater than the first range may be determined as excessive, a measured value (or a representative value) that is in a third range greater than the second range may be determined as very excessive, a measured value (or a representative value) that is in a fourth range less than the first range may be determined as insufficient, and a measured value (or a representative value) that is in a fifth range less than the fourth range may be determined as very insufficient.

Here, when a lower limit of the second range is greater than or equal to an upper limit of the first range, the second range is greater than the first range. Similarly, when an upper limit of the fourth range is less than or equal to a lower limit of the first range, the fourth range is less than the first range.

The processor 133 may be configured to transmit the compressed measurement data PMD to the first controller 141. The processor 133 may be configured to transmit the coordinate-related measurement data CMD to the roll map generator 200 (more specifically, a server 230 of the roll map generator 200). The coordinate-related measurement data CMD may be transmitted to the server 230 through the server 210 but embodiments are not limited thereto. The coordinate-related measurement data CMD may be directly transmitted from the processor133 to the server 230.

The first controller 141 may be configured to transmit the compressed measurement data PMD to the second controller 143. The second controller 143 may be configured to transmit the compressed measurement data PMD to the roll map generator 200. However, embodiments are not limited thereto, and the first controller 141 may directly transmit the compressed measurement data PMD to the roll map generator 200.

The second controller 143 may be configured to control operations of the unwinder 111, the rewinder 113, and the processing apparatus 115. The second controller 143 may be configured to generate a signal for operating or stopping the unwinder 111, the rewinder 113, and the processing apparatus 115. The signal for operating or stopping the unwinder 111, the rewinder 113, and the processing apparatus 115 may be generated based on electrode specification data ESD, the compressed measurement data PMD, an additional inspection signal, and an additional measurement signal.

The roll map generator 200 may include the servers 210, 220, 230, 240, and 250. The servers 210, 220, 230, 240, and 250 may be separate entities that perform various functions, including generating a roll map and an intermediate roll map, storing the roll map and the intermediate roll map, or relaying communication between the servers 210, 220, 230, 240, and 250. Unlike that illustration of FIG. 1, some of the servers 210, 220, 230, 240, and 250 may be integrated. For example, the server 220 and the server 230 may be integrated, the server 220 and the server 240 may be integrated, or the servers 220, 240, and 250 may be integrated.

The roll map generator 200 may be configured to generate a roll map including data related to the electrode sheet ES. The roll map may represent the electrode sheet ES based on coordinates indicating a position on the electrode sheet ES. As described above, a secondary battery manufacturing process may be performed on the electrode sheet ES. The roll map may include data representing a history of processes performed on the electrode sheet ES and related to coordinates. Accordingly, the roll map enables feedback, feedforward, and tracking of a secondary battery manufacturing process.

The roll map may include event data indicating events of a roll-to-roll process performed on the electrode sheet ES. Generally, the event data is generated as a result of performing a process and thus is time series data. Accordingly, data of process events may include values indicating the events and time values matching the values. The time series data may be temporally ordered. Temporal ordering is a main feature of time series data. Temporal ordering is organizing events in an order in which they occur and arrive to be processed. That is, the time series data may be stored based on a point in time when an event occurs (i.e., when inspection and measurement are performed or when an action of a process is performed), and the event may be matched to time values.

The manufacture of a secondary battery involves a series of different processes, and a leading process affects the following process. Feed forward should be hereinafter understood as correcting the following process based on data generated according to a result of the leading process. In this case, when time series data of the leading process does not directly match a workpiece, an intermediate product, and a product of the real world, it is difficult to reflect the time series data of the leading process in the following process. Here, the workpiece is an article provided as a result of each process, e.g., an electrode sheet of FIG. 1 on which the coating process, the roll press process, and the slitting process are performed. The intermediate product may be one of separators cut by the notching process, electrodes, and an assembly thereof. The intermediate product may be a structure including a housing and an electrode assembly included in the housing (in some cases, the structure further includes an electrolyte). The product is an article processed by the activation process to be operable as a secondary battery. The above-described definitions of the workpiece, the intermediate product, and the product are definitions thereof only in one aspect and thus should not be understood as excluding general definitions thereof.

For feedforward, time series data should be related to positions on real-world workpieces, components, intermediate products, and products. In the roll map, time series data such as measurement data may be related to coordinate data CD based on the amount of movement (i.e., the amount of winding or the amount of unwinding) of the electrode sheet ES. The roll map may allow time series data to be related with coordinate data including coordinates of the positions on the real-world workpieces, the components, the intermediate products, and the products. Accordingly, feedforward based on generation of the roll map and the roll map may improve the efficiency of production and quality by digitizing and objectifying aspects of a process that depend on an operator's discretion.

Roll maps may be generated in units of lots. The electrode sheet ES may be wound into the electrode roll ER2, and the electrode roll ER2 may be cut and separated from the electrode sheet ES connected to the electrode roll ER1 after a target amount of winding is reached. A lot is a production unit of the roll-to-roll process, and the electrode roll ER2 separated from the electrode sheet ES is an example of the lot. Accordingly, the server 220 may be configured to store a roll map of a leading process. The roll map of the leading process may correspond to the electrode roll ER1. In addition, the server 220 may be configured to generate and store a roll map of a current process. The roll map of the current process may correspond to the electrode roll ER2.

A roll map of a preceding lot may be used to improve a process of a following lot, and this operation may be referred to as process feedback. The process feedback using the roll map may include identifying process conditions and process parameters that cause a problem and a defect, based on data included in the roll map.

Furthermore, roll maps may be cumulatively generated for workpieces, intermediate products, and products of unit processes to track process history of products (e.g., battery cells, battery modules, or battery packs) on the market. For example, a battery cell may include a cell identifier (ID) on an electrode assembly or a case. The cell ID may include lot numbers and coordinate information of electrodes and a separator included in the battery cell. In other words, the cell ID may be related to a roll map of the electrodes and the separator included in the battery cell. Accordingly, when an event such as a quality issue occurs in a battery cell on the market, a history of collective data of the manufacture of the battery cell may be retrieved based on the cell ID.

The compressed measurement data PMD may be transmitted to the server 220 via the server 210. The server 210 may be a communication server. The server 210 may be, for example, a server for log data-based communication but is not limited thereto. The server 210 may be a program for communication between the second controller 143 of manufacturing equipment and the server 220 for manufacturing management. The server 210 may be implemented by hardware. A language and protocol of the server 220 may be different from a language and protocol of the controller 143. For example, the language of the server 220 may be SQL, and the language of the controller 143 may be a ladder diagram.

The server 210 may be configured to convert the electrode specification data ESD transmitted from the server 220 into the language of the controller 143. In addition, the server 210 may be configured to convert the compressed measurement data PMD into the language of the server 220 and record the compressed measurement data PMD in a database of the server 220.

The electrode specification data ESD may include model information and a recipe of the electrode sheet ES. The electrode specification data ESD may include all matters related to the processing of the electrode sheet ES, such as process conditions, including the number of lots to be processed in a current process, the number of coated lanes to be formed on the electrode sheet ES, temperature, humidity, pressure, etc., and process parameters, including a moving speed of the electrode sheet ES, a discharge amount of a coating die, pressure of pressure rolls, etc.

For control of a process, a communication line for connecting the second controller 143 and the server 220 via the server 210 may be installed between the second controller 143 and the server 220. Accordingly, data transmission through the second controller 143 may reduce resources required for the installation of the communication line and ensure efficient data processing and management, compared to a case in which the first and second encoders 121 and 123 and the measuring device 130 directly transmit the unwinding amount signal UWAS, the winding amount signal WAS, and the measurement signal MS to the server 220 and a case in which the first controller 141 directly transmits the compressed measurement data PMD to the server 220.

The server 220 may be configured to generate a roll map. The roll map may include data about specifications of a lot. The specifications of the lot may include, for example, a lot number, a length of the wound electrode sheet ES, a width of the electrode sheet ES, and materials and a composition used to process the electrode sheet ES
According to example embodiments, the server 220 may be a data processing system that supports all activities required to manage the manufacture of a secondary battery, such as work schedule management, work instructions, quality control, and work performance aggregation. The server 220 may be, for example, a manufacturing execution system (MES). The server 220 may be configured to perform inputting, processing, outputting, and communication of data necessary to perform an electrode manufacturing process, including the coating process, the roll press process, and the slitting process.

The server 230 may be configured to store the coordinate-related measurement data CMD. The server 230 may be configured to transmit the coordinate-related measurement data CMD to the server 240 in response to an API request AR from the server 240. The API request AR may include information for identifying the coordinate-related measurement data CMD. The API request AR may include, for example, a timestamp, a start coordinate, and an end coordinate.

The server 240 may be configured to store and process inspection data of the electrode sheet ES. The server 240 may manage the quality of processing the electrode sheet ES by continuously monitoring the processing of the electrode sheet ES based on the inspection data. According to example embodiments, the server 240 may be a statical process controller (SPC). The server 240 may collect and analyze manufacturing data in almost real time to identify problematic conditions in a timely manner and provide a notification to an operator before potential problems occur.

The server 250 may be configured to store data of the servers 220, 230, and 240. The server 250 may be configured to store the coordinate-related measurement data CMD and the compressed measurement data PMD. When the server 220 is an MES and the server 240 is an SPC, they may be unsuitable to store the coordinate-related measurement data CMD and the compressed measurement data PMD for a long time. The server 250 may be, for example, a data warehouse, and may store the coordinate-related measurement data CMD and the compressed measurement data PMD for a long time based on a quality guarantee period of a product or the like. Accordingly, a manufacturing process of the product can be tracked according to a life cycle of the product.

The processor 133, and the servers 210, 220, 230, 240, and 250 may be implemented by hardware, firmware, software, or a combination thereof. For example, the processor 133, and the servers 210, 220, 230, 240, and 250 may include computing devices such as workstation computers, desktop computers, laptop computers, and tablet computers. The processor 133, and the servers 210, 220, 230, 240, and 250 may include a simple controller, a complex processor such as a microprocessor, a CPU, or a GPU, a processor configured by software, dedicated hardware, or firmware. The processor 133, and the servers 210, 220, 230, 240, 250 may be implemented, for example, by a general-purpose computer or application-specific hardware such as a digital signal processor (DSP), a field programmable gate array (FPGA), or an application specific integrated circuit (ASIC).

The server 220 stores and processes a large amount of data about general manufacturing management other than the roll map, and thus, the roll map stored in the server 220 may include simplified compressed measurement data PMD instead of coordinate-related measurement data CMD including raw measurement data. The server 220 may provide the roll map in response to a request from the user device 300. The user device 300 may display a visualized roll map VRM as shown in FIG. 3. The user device 300 may be a device, e.g., a mobile device, such as a workstation computer, a laptop computer, a desktop computer, a tablet PC, or a smart phone, or a wearable device, for communication with the roll map generator 200. The user device 300 may be configured to generate a request R1 to load a roll map or a request R2 to load an intermediate roll map. The user device 300 may be configured to transmit the requests R1 and R2 to the roll map generator 200. The user device 300 may include input tools for inputting the requests R1 and R2, and a display device displaying the visualized roll map VRM.

The visualized roll map VRM may include a plurality of visualization sections VS1, VS2, VS3, VS4, VS5 and VS6 corresponding to the plurality of sections S1, S2, S3, S4, S5 and S6 of the electrode sheet ES. Each of the plurality of visualization sections VS1, VS2, VS3, VS4, VS5, and VS6 may include a start coordinate, an end coordinate, and a color.

The start coordinate of the visualization section VS1 may be X1 and the end coordinate thereof may be X2. The start coordinate of the visualization section VS2 may be X2 and the end coordinate thereof may be X3. The start coordinate of the visualization section VS3 may be X3 and the end coordinate thereof may be X4. The start coordinate of the visualization section VS4 may be X4 and the end coordinate thereof may be X5. The start coordinate of the visualization section VS5 may be X5 and the end coordinate thereof may be X6. The start coordinate of the visualization section VS6 may be X6 and the end coordinate thereof may be X7.

A representative value of the coordinate-related measurement data CMD of the visualization sections VS1, VS2, VS4, and VS6 may be displayed in a color C1, a representative value of the coordinate-related measurement data CMD of the visualization section VS3 may be displayed in a color C2, and a representative value of the coordinate-related measurement data CMD of the visualization sections VS5 may be displayed in a color C3.

The color C1 may indicate that the representative value of the visualization sections VS1, VS2, VS4, and VS6 is normal, the color C2 may indicate that the representative value of the visualization section VS3 is excessive, and the color C3 may indicate that the representative value of the visualization section VS3 is very excessive. A color C4 may indicate that a representative value is insufficient, and a color C5 may indicate that a representative value is very insufficient.

Here, the visualized roll map VRM showing only one type of coordinate-related measurement data CMD is illustrated for convenience of description, but the roll map may further include additional data such as inspection data generated by an inspector, equipment data, and data of process parameters. Such additional data may be related to coordinates, and a way in which the additional data is related to the coordinates may be different from that of the coordinate-related measurement data CMD. For example, pinch hole defect data, which is a one of the inspection data, may be matched to a single coordinate representing a position of a pinch hole rather than a start coordinate and an end coordinate.

The intermediate roll map may be provided by relating coordinate-related measurement data CMD including raw measurement data to the roll map. The coordinate-related measurement data CMD may be related with the roll map, based on a timestamp and coordinates. The intermediate roll map may provide information about the raw measurement data to provide statistical production management, in addition to the roll map that provides information about defects and production performance based on the defects. Accordingly, the intermediate roll map may provide additional insights into the quality of a workpiece, the performance of a process, overall equipment effectiveness (OEE) drill down, sensing of anomality, traceability, preventive maintenance, and predictive alerts.

The servers 210, 220, 230, 240, and 250 may include a physical server or a cloud server. The servers 210, 220, 230, 240, and 250 may provide an operator with data and analysis results through various frameworks. The framework may include a protocol that supports data transmission to enable the user device 300 to visualize data through the user interface and provide updated visualizations as new data is calculated by the servers 220, 230. The protocol supporting data transmission may use HTML, JavaScript, and/or JSON.

The servers 210, 220, 230, 240, and 250 may include various application programming interfaces (APIs) for storing data in a database and other data management tools. The APIs may also be used to retrieve data from databases of various data management systems. The data management systems may provide access to a database, pull or retrieve data from the database, and generate metrics. Here, the metrics are a tool for visualizing data. The metrics include measured values generated in a time-series manner and may be used to monitor applications and generate a status warning.

According to some embodiments, the operations of the processor 133 and the servers 210, 220, 230, 240, and 250 may be implemented as instructions stored in a machine-readable medium that may be read and executed by one or more processors. Here, the machine-readable medium may include an arbitrary mechanism for storing and/or transmitting information in a form readable by a machine (e.g., a computing device). For example, machine-readable media may include a read-only memory (ROM), a random access memory (RAM), a magnetic disk storage medium, an optical storage medium, a flash memory, electrical, optical, acoustic, or other types of radio signals (e.g., carrier waves, infrared signals, digital signals, etc.), and other signals.

The processor 133 and the servers 210, 220, 230, 240, and 250 may include firmware, software, routines, and instructions for performing the above-described operation, or a process described below. For example, the processor 133 and the servers 210, 220, 230, 240, and 250 may be instantiated in a memory.

However, this is for the sake of convenience in explanation, and the operations of the aforementioned processing unit 133 and servers 210, 220, 230, 240, 250 may also result from computing devices, distributed computing devices, processors, firmware, software, routines, and other devices executing routines, and instructions.

The secondary battery manufacturing system 10 may implement a plug-in architecture with an API for obtaining data to provide a plug-and-play connection between the measuring device 130 and additional measuring devices and inspectors. Accordingly, resources in a certain process step and a specific site can be easily transferred to different processes and different sites or new resources can be easily introduced into each process step and each site.

A data network between the components of the secondary battery manufacturing system 10 may include various types of communication channels including unidirectional and bidirectional wired and wireless communications. For example, the data network may include an industrial protocol network such as OPC, Modbus, or ProfiNet. The communication channel may be a channel of dedicated conduit communication such as universal serial bus (USB), IEEE 802 (Ethernet), IEEE 1394 (FireWire), or other high-speed data communication standards.

In some embodiments, the roll map generator 200 may further include a manual input system that allows an operator to input manufacturing data. The roll map generator 200 may allow a computer-based input of manufacturing data such as inputting data by an operator using an input tool and Excel file scraping.

An architecture configured to generate the roll map and the intermediate roll map may be implemented by adding only the first controller 141 to elements essential in a modern process management system. That is, in a system according to example embodiments, resources of an already-installed manufacturing site can be used and additional capital expenditure can be reduced. In addition, applying the same architecture as existing manufacturing equipment to newly constructed manufacturing equipment may lead to improvement of the reliability of the manufacture of a secondary battery, detection/improvement of problematic processes, and effective introduction of new processes.

### (Second Embodiment)

FIG. 4 is a flowchart of a method of generating a roll map according to example embodiments.

Referring to FIGS. 1 and 4, in P110, specifications of a lot may be registered in the first server 220. The specifications of the lot may be automatically registered in the first server 220 based on the electrode specification data ESD. Alternatively, the registration of specifications of the lot may be triggered by signals generated by the second controller 143. Alternatively, the registration of the specifications of the lot may be triggered by scanning an identification mark of the lot by a reader of the secondary battery manufacturing apparatus 100. Alternatively, the specifications of the log may be manually registered by an operator.

Next, in P120, coordinate data CD and measurement data may be collected. The coordinate data CD may be collected by the first controller 141. As described above, the measurement data may be collected by the measuring device 130.

Next, in P130, coordinate-related measurement data CMD and compressed measurement data PMD may be generated. As described above, the coordinate-related measurement data CMD and the compressed measurement data PMD may be generated by the processor 133 of the measuring device 130.

Next, in P140, the coordinate-related measurement data CMD and the compressed measurement data PMD may be transmitted to the roll map generator 200. The compressed measurement data PMD may be transmitted to the server 220. The server 220 may be configured to generate a roll map based on the compressed measurement data PMD. The embodiments in which a roll map is generated by the first server 220 have been described above for example and should not be understood as limiting the technical idea of the present invention in any sense. The roll map may be generated by one of the servers 230, 240, and 250.

### (Third Embodiment)

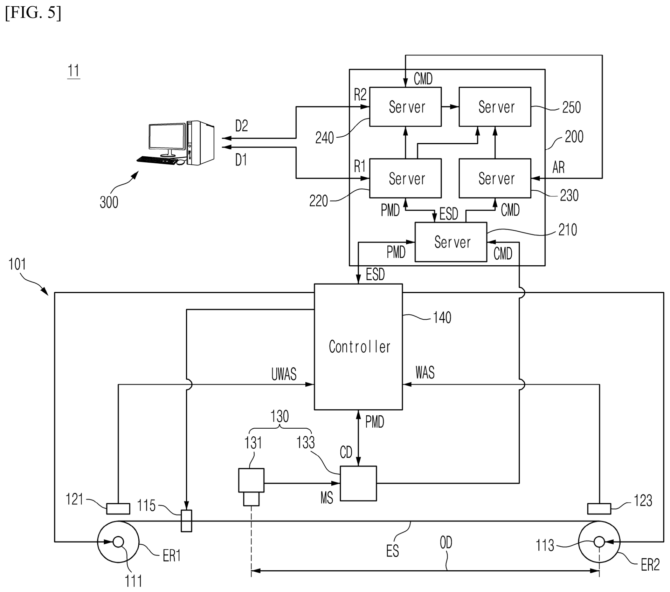

FIG. 5 illustrates a secondary battery manufacturing system 11 according to example embodiments.

Referring to FIG. 5, the secondary battery manufacturing system 11 may include a secondary battery manufacturing apparatus 101, a roll map generator 200, and a user device 300.

The roll map generator 200 and the user device 300 are substantially the same as those described above with reference to FIGS. 1 to 3 and thus a redundant descriptions thereof is omitted here.

The secondary battery manufacturing apparatus 101 may include an unwinder 111, a rewinder 113, a processing apparatus 115, a first encoder 121, a second encoder 123, a measuring device 130, and a controller 140.

The controller 140 may be configured to perform the functions of the first controller 141 and the second controller 143 of FIG. 1. Accordingly, the controller 140 may be configured to generate coordinate data CD based on an unwinding amount signal UWAS or a winding amount signal WAS, transmit the coordinate data CD to the processor 133 of the measuring device 130, receive coordinate-related measurement data CMD and compressed measurement data PMD from the processor 133, and transmit the coordinate-related measurement data CMD and the compressed measurement data PMD to a first server 220 through a server 210. The controller 140 may be configured to generate a signal for controlling the unwinder 111, the rewinder 113, and the processing apparatus 115.

### (Fourth Embodiment)

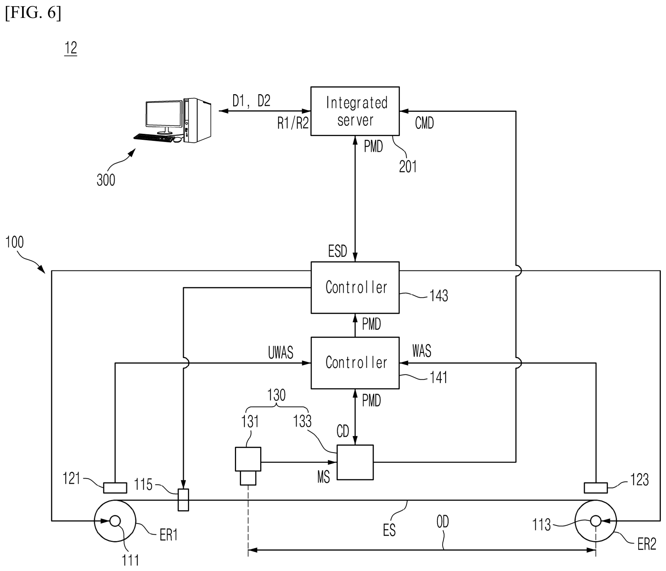

FIG. 6 illustrates a secondary battery manufacturing system 12 according to example embodiments.

Referring to FIG. 6, the secondary battery manufacturing system 12 may include a secondary battery manufacturing apparatus 100, a server 201, and a user device 300.

The secondary battery manufacturing apparatus 100 and the user device 300 are substantially the same as those described above with reference to FIGS. 1 to 3 and thus a redundant descriptions thereof is omitted here.

The server 201 may be configured to perform the functions of the servers 210, 220, 230, 240, and 250 of FIG. 1. Accordingly, the server 201 may be configured to receive coordinate-related measurement data CMD and compressed measurement data PMD, generate a roll map and an intermediate roll map, and transmit data D1 of the roll map and data D2 of the intermediate roll map to the user device 300.

The present invention has been described above in more detail with reference to the drawings, the embodiments, etc. However, the configurations illustrated in the drawings or embodiments described in the present specification are only embodiments of the present invention and do not reflect all the technical ideas of the present invention and thus it should be understood that various equivalents and modifications that replace the configurations would have been made at the filing date of the present application.

## Claims

1. A secondary battery manufacturing system comprising:
a first controller configured to collect coordinate data of an electrode sheet based on a winding amount signal of the electrode sheet generated by an encoder, wherein the encoder is configured to sense a length of the electrode sheet wound by a rewinder to generate the winding amount signal, and the coordinate data includes coordinates indicating a position on the electrode sheet; and
a measuring device configured to collect measurement data of the electrode sheet,
wherein the measuring device is configured to relate the coordinate data with the measurement data to generate coordinate-related measurement data.

2. The second battery manufacturing system of claim 1, wherein the measurement data comprises measured values and a time value matching the measured values.

3. The second battery manufacturing system of claim 1, wherein the measuring device is configured to calibrate the coordinate data, based on a position of the measuring device.

4. The second battery manufacturing system of claim 1, wherein the measuring device is configured to calibrate the coordinate data based on an offset length to relate the coordinate data with the measurement data,
wherein the offset length is a length of the electrode sheet between the rewinder and a portion of the electrode sheet measured by the measuring device.

5. The second battery manufacturing system of claim 1, wherein the measuring device is configured to transmit the coordinate-related measurement data to the first controller.

6. The second battery manufacturing system of claim 5, wherein the measuring device is configured to scan each of a plurality of sections of the electrode sheet, and
the transmitting of the coordinate-related measurement data by the measuring device is triggered by completion of scanning performed by the measuring device.

7. The second battery manufacturing system of claim 5, wherein the measuring device is configured to further generate compressed measurement data based on the measurement data and the coordinate data,
wherein a size of the compressed measurement data is less than a size of the coordinate-related measurement data.

8. The secondary battery manufacturing system of claim 7, wherein the compressed measurement data comprises a representative value of the measured values of the measurement data, and a start coordinate and an end coordinate of a portion of the electrode sheet from which the measurement data is collected,
wherein the start coordinate and the end coordinate are determined based on the coordinate data.

9. The secondary battery manufacturing system of claim 7, wherein the compressed measurement data further comprises a judgement value determined from the measurement data.

10. The secondary battery manufacturing system of claim 7, wherein the compressed measurement data further comprises a timestamp indicating a date and time when the measurement data is collected.

11. The secondary battery manufacturing system of claim 7, wherein the compressed measurement data further comprises a measuring device identifier (ID) identifying the measuring device and an equipment ID identifying equipment for processing the electrode sheet.

12. The secondary battery manufacturing system of claim 7, further comprising a first server configured to generate a roll map indicating the electrode sheet, based on the compressed measurement data.

13. The secondary battery manufacturing system of claim 12, wherein the first controller is configured to transmit the coordinate-related measurement data to the first server.

14. The secondary battery manufacturing system of claim 13, further comprising a second controller configured to relay the transmission of the coordinate-related measurement data between the first server and the first controller,
wherein the second controller is configured to generate a signal for controlling the rewinder.

15. The secondary battery manufacturing system of claim 10, further comprising a second server configured to store the coordinate-related measurement data.

16. The secondary battery manufacturing system of claim 15, further comprising a third server configured to transmit an application programming interface (API) call to the second server,
wherein the second server is configured to transmit the coordinate-related measurement data to the third server in response to the API call.

17. A secondary battery manufacturing system comprising:
a controller configured to collect coordinate data of an electrode sheet based on a winding amount signal of the electrode sheet generated by an encoder, wherein the encoder is configured to sense a length of the electrode sheet wound by a rewinder to generate the winding amount signal, and the coordinate data includes coordinates indicating a position on the electrode sheet;
a measuring device configured to collect measurement data of the electrode sheet, relate the coordinate data with the measurement data to generate coordinate-related measurement data, and generate compressed measurement data including a representative value of measured values of the measurement data, based on the coordinate data and the measurement data; and
a server configured to generate a roll map indicating the electrode sheet based on the compressed measurement data,
wherein the server is configured to store the compressed measurement data and the coordinate-related measurement data.

18. The secondary battery manufacturing system of claim 17, wherein the server comprises a data warehouse.

19. A secondary battery manufacturing system comprising:
a controller configured to collect coordinate data of an electrode sheet based on a winding amount signal of the electrode sheet generated by an encoder, wherein the encoder is configured to sense a length of the electrode sheet wound by a rewinder to generate the winding amount signal, and the coordinate data includes coordinates indicating a position on the electrode sheet; and
a measuring device configured to collect measurement data of the electrode sheet and relate the coordinate data with the measurement data to generate coordinate-related measurement data,
wherein the controller is configured to control the rewinder.
